# EUROPÄISCHE PATENTSCHRIFT

(11) **EP 1 858 182 B1**
(45) Veröffentlichungstag und Bekanntmachung des Hinweises auf die Patenterteilung: **14.06.2017**
(21) Anmeldenummer: 07008638.4
(22) Anmeldetag: 27.04.2007
(51) Int. Cl.: H04H 20/62

(54) **Aus mehreren gekoppelten Einheiten bestehendes System für den Informationszugriff und für Kommunikation in einem Fahrzeug.**
System for information access and communication in a vehicle constituted by several coupled units
Système pour l'accès aux informations et pour la communication dans un véhicule constitué par plusieurs unités couplées

(30) Priorität: 18.05.2006 DE 102006023319
(43) Veröffentlichungstag der Anmeldung: 21.11.2007
(73) Patentinhaber: Deutsche Telekom AG, 53113 Bonn (DE)
(72) Erfinder: Grund, Norbert, 55120 Mainz (DE); Kreher, Wolfgang, 64839 Münster (DE); Macht, Alois, 64823 Groß-Umstadt (DE); Terrés, José Luis Mateo, 64287 Darmstadt (DE); Stöttinger, Klaus Holger, 65205 Wiesbaden (DE); Zimmermann, Gerd, 64331 Weiterstadt (DE)
(74) Vertreter: Bucher, Ralf Christian

(56) Entgegenhaltungen:
- WO-A1-01/69540
- WO-A1-2004/038968
- DE-A1- 10 126 529
- JP-A- 2005 031 476
- US-A1- 2002 094 829
- US-A1- 2003 071 744
- US-A1- 2005 254 818

## Beschreibung

Die Erfindung betrifft ein System für den Informationszugriff und die Kommunikation in einem Fahrzeug, insbesondere einem Hochgeschwindigkeitsfahrzeug mit mehreren gekoppelten Einheiten gemäß Anspruch 1.

Aus der DE 102 07 858 A1 sind ein Verfahren und System für die Informationsbereitstellung und Kommunikation in Fahrzeugen wie beispielsweise Zügen bekannt, bei denen Fahrzeuginsassen über elektronische Geräte wie Laptops oder PDAs (Personal Digital Assistants) auf im Fahrzeug lokal gespeicherte Informationen wie beispielsweise Fahrplandaten, Nachrichten oder Entertainmentangebote zugreifen können. Der Zugriff erfolgt hierbei per Funkkommunikation zwischen den elektronischen Geräten und Funk-Zugriffspunkten (Access Points), die im Fahrzeug verteilt angeordnet sind. Um eine hohe Datenübertragungsrate und damit einen effizienten Zugriff auf die lokal gespeicherten Informationen zu ermöglichen, werden vorzugsweise Funktechnologien wie die WLAN (Wireless Local Area Network)-Funktechnologien IEEE 802.11, Bluetooth oder auch HYPERLAN/2 genutzt.

Mittlerweile wird ein derartiges System in einigen ICE (Intercity Express)-Zügen der Deutschen Bahn AG im Rahmen einer Kooperation mit der T-Mobile Deutschland GmbH eingesetzt und ermöglicht Fahrgästen der Deutschen Bahn AG den Zugriff auf verschiedene Informationen beispielsweise vom Laptop oder PDA mit WLAN-Funkschnittstelle aus.

Die WO 01/69540 A1 betrifft ein Verfahren und System zum elektronischen Registrieren und Bereitstellen von Informationen über die Benutzung von einem öffentlichen Transportmittel, beispielsweise einem Bus, Zug, Taxi oder dergleichen. Hierzu ist in einem Transportmittel eine lokale Kommunikationsinfrastruktur installiert, die eine oder mehrere Funk-Zugriffspunkte umfasst, die zur Datenkommunikation mit Datenverarbeitungsgeräten per Funk ausgebildet sind. Die Funk-Zugriffspunkte sind ferner über ein Datennetzwerk mit einer lokalen Servereinheit kommunikationsmäßig verbunden. Die Funk-Zugriffspunkte arbeiten vorzugsweise gemäß dem Bluetooth-Standard. Mehrere Funk-Zugriffspunkte können kaskaden-artig mit der Servereinheit derart kommunizieren, dass die Kommunikation zwischen einem Funk-Zugriffspunkt und der Servereinheit über einen oder mehrere andere Funk-Zugriffspunkte erfolgen kann.

Die WO2004/038968A1 betrifft ein drahtloses Übertragungssystem für Multimedia-Inhalte für Passagiere mit den Merkmalen des Oberbegriffs von Patentanspruch 1.

Aufgabe der vorliegenden Erfindung ist es nun, ein System für den Informationszugriff und die Kommunikation in einem Fahrzeug mit mehreren gekoppelten Einheiten vorzuschlagen, das Nutzern insbesondere einen sicheren und hochverfügbaren Dienst zur Verfügung stellt und zugleich einen möglichst geringen Einfluss auf verkehrstechnische Einrichtungen hat.

Diese Aufgabe wird durch ein System für den Informationszugriff und die Kommunikation in einem Fahrzeug mit mehreren gekoppelten Einheiten mit den Merkmalen von Anspruch 1 gelöst. Bevorzugte Ausgestaltungen der Erfindung ergeben sich aus den abhängigen Ansprüchen.

Ein Ausführungsformen der Erfindung zu Grunde liegender wesentlicher Gedanke besteht darin, dass bei einem Fahrzeug, insbesondere einem Hochgeschwindigkeitsfahrzeug mit mehreren gekoppelten Einheiten wie beispielsweise einem Hochgeschwindigkeitszug mit mehreren Wagen in der Regel keine Möglichkeit existiert, Kabelverbindungen zwischen den einzelnen benachbarten Einheiten zur Datenübertragung zu nutzen, da eine kabelgebundene Datenübertragung in der Praxis in vielerlei Hinsicht problematisch ist, insbesondere hohen mechanischen Belastungen ausgesetzt ist. Daher schlägt die Erfindung eine drahtlose Kommunikationsverbindung zwischen benachbarten Einheiten vor, insbesondere eine funkbasierte Kommunikationsverbindung. Mit einer derartigen Kommunikationsverbindung zwischen den gekoppelten Einheiten kann eine hohe Datenübertragungsrate und vor allem eine relativ störungsfreie Datenübertragung erzielt werden. Zudem kann ein Datennetzwerk durch das gesamte Fahrzeug gebildet werden, wodurch die Ausrüstungskosten im Vergleich zur Ausrüstung jeder einzelnen Einheit des Fahrzeugs mit Servern für die Kommunikation und zur Informationsbereitstellung gesenkt werden können.

Gemäß einer Ausführungsform der Erfindung ist ein System für den Informationszugriff und die Kommunikation in einem Fahrzeug mit mehreren gekoppelten Einheiten vorgesehen, das
- mindestens eine in einer Einheit des Fahrzeugs vorgesehene Servereinheit, die zur Informationsbereitstellung und Kommunikation eingerichtet ist,
- mehrere in verschiedenen Einheiten vorgesehene Funk-Zugriffspunkte, die zur Datenkommunikation mit Datenverarbeitungsgeräten per Funk ausgebildet sind, und
- ein Datennetzwerk umfasst, das die Servereinheit mit den Funk-Zugriffspunkten kommunikationsmäßig verbindet und das drahtlose Kommunikationsverbindungen zwischen benachbarten gekoppelten Einheiten aufweist.

Durch die Ausbildung eines Datennetzwerks im gesamten Fahrzeug wird mit Datenverarbeitungsgeräten ausgestatteten Fahrgästen ein drahtloser Zugriff per Funk auf Informationen, beispielsweise ein drahtloser Internetzugang, und eine drahtlose Kommunikation per Funk, beispielsweise das Senden und Empfang von e-Mails über das Internet, ermöglicht. Durch die kommunikationsmäßige Kopplung benachbarter Einheiten des Fahrzeugs muss nicht in jeder Einheit eine eigenständige Servereinheit zur Informationsbereitstellung und Kommunikation vorgesehen werden, sondern es reicht eine zentrale Servereinheit für das gesamte Fahrzeug aus. Dadurch können die Ausstattungskosten eines Fahrzeugs mit mehreren gekoppelten Einheiten beträchtlich reduziert werden.

Gemäß einer Ausführungsform der Erfindung kann eine drahtlose Kommunikationsverbindung zwischen zwei benachbarten gekoppelten Einheiten des Fahrzeugs durch eine Funkbrücke implementiert sein. Eine Funkbrücke kann vor allem mit kostengünstigen WLAN-Komponenten implementiert werden. Dadurch kann eine kostengünstige und im Vergleich zu einer Kabelverbindung relativ zuverlässige Kommunikationsverbindung zwischen den einzelnen Einheiten geschaffen werden.

Die Funkbrücke zur Funkkommunikation kann gemäß einer Ausführungsform der Erfindung in einem Frequenzbereich ausgebildet sein, der sich vom für eine Funkkommunikation innerhalb von den Einheiten genutzten Frequenzbereich derart unterscheidet, dass möglicherweise auftretende Interferenzen minimiert werden.

Die Servereinheit umfasst gemäß einer Ausführungsform der Erfindung einen Access- und Gateway-Server, der zur Steuerung der gesamten Kommunikation über das Datennetzwerk und zur Funkkommunikation mit dem Internet eingerichtet ist.

Insbesondere kann der Access- und Gateway-Server gemäß einer Ausführungsform der Erfindung derart eingerichtet sein, dass eine Funkkommunikation mit dem Internet mittels einer Mobilfunk- und/oder Wireless LAN (Local Area Network)/MAN (Metropolitan Area Network)-Technologie erfolgt. Als Mobilfunktechnologie bietet sich insbesondere UMTS (Universal Mobile Telecommunication System) an, dass mittlerweile eine mit DSL (Digital Subscriber Line) vergleichbare Datenübertragungsrate ermöglicht. Mit UMTS kann daher auch bei einer Vielzahl paralleler Kommunikationsverbindungen jeder Verbindung eine für einen Internetzugang und e-Mail-Kommunikation ausreichende Datenübertragungsrate zur Verfügung gestellt werden.

Um Probleme mit beispielsweise funkgesteuerten Zugsignalen oder dergleichen insbesondere in bestimmten geografischen Gebieten zu vermeiden, kann das System gemäß einer Ausführungsform der Erfindung derart eingerichtet sein, dass die Funk-Zugriffspunkte und die drahtlosen Kommunikationsverbindungen zwischen benachbarten gekoppelten Einheiten abhängig von der geografischen Position des Fahrzeugs aktiviert oder deaktiviert werden. Beispielsweise kann bei einem Zug bei Überschreiten einer Landesgrenze das System automatisch abgeschaltet werden, um Störungen von Zugsignalen etc. durch die Funkkommunikation zu vermeiden.

Weiterhin kann das System gemäß einer Ausführungsform der Erfindung derart eingerichtet sein, dass die Funk-Zugriffspunkte und die drahtlosen Kommunikationsverbindungen zwischen benachbarten gekoppelten Einheiten deaktiviert werden, wenn das Fahrzeug ein vorbestimmtes Gebiet verlässt, und wieder aktiviert werden, wenn das Fahrzeug in das vorbestimmte Gebiet eintritt. Die Aktivierung und Deaktivierung kann beispielsweise durch ein Navigationssystem wie GPS oder das zukünftige europäische Satellitennavigationssystem Galileo gesteuert werden.

Um Fahrgästen auch bei einer unterbrochenen Kommunikationsverbindung zur Außenwelt des Fahrzeugs ein Informationsangebot zur Verfügung zu stellen, kann die Servereinheit gemäß einer Ausführungsform der Erfindung ferner einen Anwendungsserver umfassen, der zur lokalen Informations- und Anwendungsbereitstellung im Fahrzeug vorgesehen ist. Die Umschaltung auf das lokale Informations- und Anwendungsangebot bzw. den Anwendungsserver kann insbesondere automatisch erfolgen, wenn eine Unterbrechung der Kommunikationsverbindung zur Außenwelt von der Servereinheit detektiert wird.

Um die Kapazität des Datennetzwerks optimal auszunutzen, kann das Datennetzwerk gemäß einer Ausführungsform der Erfindung ein Local Area Network - LAN - sein, in dem mindestens drei virtuelle LANs - VLANs - implementiert sind, wovon ein erstes VLAN ein unverschlüsseltes LAN für den Zugriff von Fahrgästen im Fahrzeug, ein zweites VLAN ein verschlüsseltes LAN für Personal im Fahrzeug und ein drittes VLAN ein verschlüsseltes LAN für ein Netzmanagement ist. Dadurch ist lediglich ein Datennetzwerk erforderlich, um drei verschiedene "Sub"-Netzwerke zu implementieren, die getrennt voneinander benutzt werden können.

Um eine möglichst hohe Ausfallsicherheit zu erzielen, können das Datennetzwerk und die drahtlosen Kommunikationsverbindungen zwischen benachbarten gekoppelten Einheiten gemäß einer Ausführungsform der Erfindung redundant ausgelegt sein, wobei in einer Einheit mit Funk-Zugriffpunkten zwei, jeweils unterschiedlichen Segmenten des Datennetzwerks zugeordnete Funk-Zugriffspunkte vorgesehen sind und in einer Einheit jedes der beiden Segmente jeweils zwei drahtlose Kommunikationsverbindungen zwischen benachbarten gekoppelten Einheiten aufweist. Sollte beispielsweise ein Funk-Zugriffspunkt in einer Einheit ausfallen, wird der Datenverkehr über den zweiten Funk-Zugriffspunkt abgewickelt. Zwar sinken dann unter Umständen die für jeden Benutzer des Datennetzwerks in dieser Einheit zur Verfügung stehenden Datenübertragungsraten, allerdings fällt das Datennetzwerk nicht vollständig in der betroffenen Einheit aus. Dies gilt auch für die drahtlosen Kommunikationsverbindungen zwischen benachbarten Einheiten, die aufgrund ihrer redundanten Auslegung eine höhere Ausfallsicherheit besitzen.

Gemäß einer Ausführungsform der Erfindung sollen zwei Funk-Zugriffspunkte in einigen Einheiten des Fahrzeugs derart angeordnet sein, dass von jedem Platz in diesen Einheiten eine für eine stabile Kommunikationsverbindung ausreichende Funkversorgung gewährleistet ist. Insbesondere soll gemäß einer weiteren Ausführungsform der Erfindung einer der zwei Funk-Zugriffspunkte am Anfang und der andere am Ende einer Einheit des Fahrzeugs angeordnet sein. Diese Anordnung hat sich für die meisten Einheiten beispielsweise bei Hochgeschwindigkeitszügen als guter Kompromiss zwischen Funkversorgung bzw. -abdeckung und Aufwand bei der Verkabelung von Komponenten des erfindungsgemäßen Systems erwiesen. Um gegenseitige Beeinflussungen, insbesondere Interferenzen zu vermeiden, sollten gemäß einer Ausführungsform der Erfindung die zwei Funk-Zugriffspunkte unterschiedliche Funkkanäle zur Kommunikation mit Datenverarbeitungsgeräten nutzen, beispielsweise im Falle von WLAN-Equipment frequenzmäßig weit auseinander liegende Kanäle wie die Kanäle 1 und 11.

Um eine frequenzmäßige Beeinflussung zwischen den Funk-Zugriffspunkten in den Einheiten und den drahtlosen Kommunikationsverbindungen zwischen benachbarten Einheiten möglichst zu vermeiden, können gemäß einer Ausführungsform der Erfindung Funk-Zugriffspunkte jeweils in einem Frequenzbereich von etwa 2.4 GHz und drahtlose Kommunikationsverbindungen zwischen benachbarten gekoppelten Einheiten jeweils in einem Frequenzbereich von etwa 5 GHz betrieben werden.

Um eine möglichst hohe Stabilität der drahtlosen Kommunikationsverbindungen zu erreichen, sollten diese gemäß einer Ausführungsform der Erfindung zwischen benachbarten gekoppelten Einheiten jeweils am Anfang und Ende jeder Einheit vorgesehen sein. Dadurch ist die Funkstrecke der drahtlosen Kommunikationsverbindungen kurz und die Empfangsfeldstärke an den jeweiligen Stationen der drahtlosen Kommunikationsverbindungen entsprechend hoch und damit störsicher.

Gemäß einer Ausführungsform der Erfindung können die drahtlosen Kommunikationsverbindungen im Bereich von Übergängen zwischen benachbarten gekoppelten Einheiten angeordnet sein, wo sie ohne größeren technischen Aufwand insbesondere bei Wagen von Zügen integriert werden können. Beispielsweise können die drahtlosen Kommunikationsverbindungen gemäß einer Ausführungsform der Erfindung im Decken- oder Türenbereich bei bzw. von Übergängen zwischen benachbarten gekoppelten Einheiten angeordnet sein.

Schließlich sieht eine Ausführungsform der Erfindung vor, die Funk-Zugriffspunkte und die drahtlosen Kommunikationsverbindungen zwischen benachbarten gekoppelten Einheiten mit einem separaten Stromkreis zu versorgen. Dadurch kann das Datennetzwerk einfach und schnell abgeschaltet werden, ohne andere elektrische Komponenten in den Einheiten des Fahrzeugs wesentlich zu beeinflussen.

Aus der folgenden Beschreibung von Ausführungsbeispielen ergeben sich weitere Vorteile und Anwendungsmöglichkeiten der vorliegenden Erfindung.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: eine Übersicht über das gesamte System für den Informationszugriff und die Kommunikation in einem ICE mit mehreren Wagen mit seinen einzelnen Komponenten; und
- Fig. 2: die Anordnung von Funk-Zugriffspunkten und Routern in Wagen eines ICE gemäß einem ersten Ausführungsbeispiel des erfindungsgemäßen Systems für den Informationszugriff und die Kommunikation.

Im Folgenden können (funktional) gleiche Elemente mit den selben Bezugszeichen versehen sein.

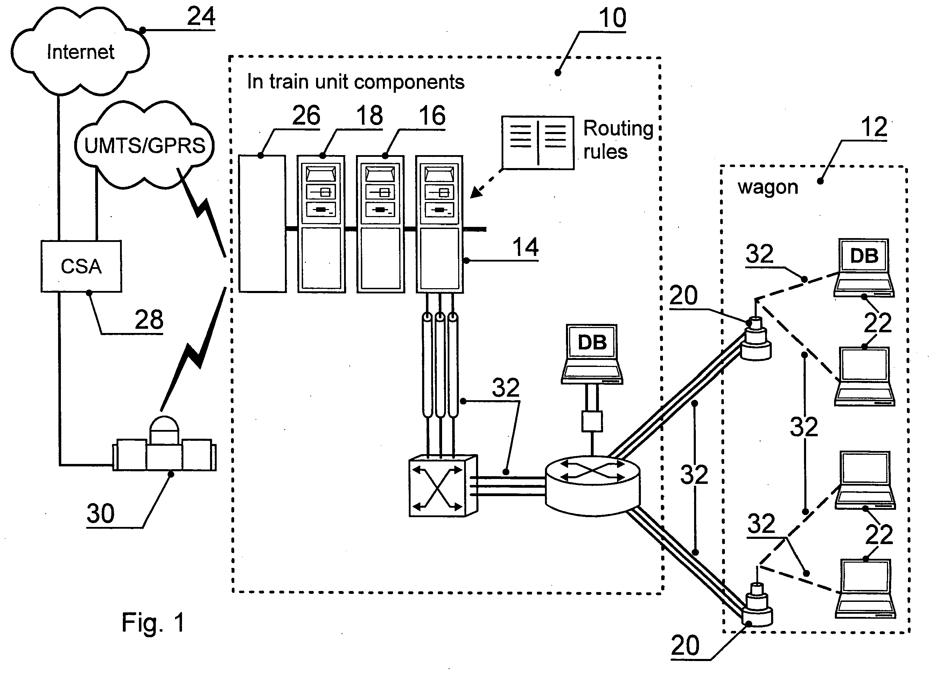

Fig. 1 zeigt die Komponenten und deren Kommunikationsverbindungen eines lokales Accessnetzwerks und eines WLAN-Backbones, wie sie in einem ICE der Deutschen Bahn AG zum Einsatz kommen. Lokales Accessnetzwerk und WLAN-Backbone bilden ein erfindungsgemäßes Datennetzwerk für einen Informationszugriff und die Kommunikation im Zug. Insbesondere handelt es sich hierbei um eine Transportplattform, welche WLAN-fähige Datenverarbeitungs- bzw. Endgeräte (Laptop, Notebook, PDA usw.) von Fahrgästen mit einem Access-Server im Zug verbindet, um den Fahrgästen einen Internetzugang im Zug zu ermöglichen. Die dargestellten Komponenten lassen sich in die Gruppe 10 der "in train unit" Komponenten und die Gruppe 12 der in den einzelnen Wagen des Zugs vorgesehenen Komponenten einteilen.

Die Komponenten der Gruppe 10 sind zentrale Komponenten des Systems und befinden sich in der Regel in einem zentralen Wagen des Zugs. Die Gruppe 10 weist eine zentrale Servereinheit auf, die einen Access-Server 14, einen Anwendungs (Application)-Server 16 und einen Gateway-Server 18 umfasst. Die zentrale Servereinheit regelt den Zugang zum Internet 24 über einen MAR (Mobile Access Router) 26, der über Mobilfunkverbindungen wie UMTS oder GPRS (General Packet Radio Service) die Kommunikationsverbindungen der Endgeräte 22 von Fahrgästen mit dem Internet 24 vermittelt. Zwischen Internet 24 und Router 26 befindet sich eine CSA (Central Service Area) 28, die ein Mobilfunknetz eines Mobilfunkdienstanbieters ist, über welches die Kommunikationsverbindungen mit dem Internet 24 hergestellt werden. Der MAR 26 kann auch über eine WLAN-Funkverbindung mit einer entsprechenden Gegenstelle in einem Bahnhof 30 kommunizieren, beispielsweise um aktuelle Informationen auf den Application-Server 16 bei einem Aufenthalt des Zugs im Bahnhof 30 zu laden.

Die Gruppe 12 umfasst Funk-Zugriffspunkte (WLAN-Access Points) 20, über die Datenverarbeitungs- bzw. Endgeräte 22, insbesondere Laptops von Fahrgästen, Kommunikationsverbindungen zu der zentralen Servereinheit aufbauen können. Die WLAN-Access Points 20 sind in den einzelnen Wagen des Zugs verteilt derart angeordnet, dass eine optimale Funkabdeckung bzw. -versorgung von Fahrgästen erzielt werden kann.

Der Zugang zu einzelnen, in den einzelnen Wagen des Zugs verteilten WLAN-Access Points 20 (oder daran angeschlossenen Antennen) ist einem Fahrgast überall im Zug möglich, ohne dass eine spezielle Software bzw. Konfiguration für die Endgeräte 22 (Notebooks, Laptops, MDAs (Mobile Digital Assistants) und PDAs) notwendig ist, vorausgesetzt, ein Endgerät 22 verfügt über ein WLAN-Funkmodul. Die Anbindung der Endgeräte 22 der Fahrgäste bzw. des Zugpersonals erfolgt über den WLAN-Standard IEEE 802.11 b im 2,4 GHz-Frequenzband.

Das im Zug gebildete Datennetzwerk 32 umfasst drei VLANs, die für verschiedene Zwecke vorgesehen sind (Beschreibung siehe weiter unten).

Für den Netzzugang des Zugpersonals sind in dem separaten VLAN besondere Sicherheitsanforderungen erfüllt, um einen Zugriff durch Unbefugte zu verhindern. Folgende Sicherheitseinstellungen können mindestens eingestellt werden:
- Kein Broadcast der SSID (Service Set Identifier; Closed network);
- WLAN Verschlüsselung mindestens WPA-TKIP, besser WPA2 mit AES Verschlüsselung nach 802.11 i.

Die Verschlüsselungseinstellungen müssen von den Endgeräten des Zugpersonals unterstützt werden.

Im Folgenden wird nun der WLAN-Backbone im Zug im Detail beschrieben. Da keine Möglichkeit existiert, zwischen den einzelnen Wagen des Zugs Kabelverbindungen zu nutzen, muss die Kopplung bzw. Kommunikation zwischen den Wagen des Zugs daher über berührungslose Techniken erfolgen. WLAN-Funkkomponenten bieten hier den Vorteil der einfachen und kostengünstigen Realisierung mit der Bridging-Funktionalität. Um eine frequenzmäßige Entkopplung zum Fahrgast-Access zu schaffen, kann für das WLAN-Backbone die Verwendung des WLAN-Standards IEEE 802.11a/h im 5 GHz Bereich benutzt werden. Es kann auch der Standard IEEE 802.11 b/g eingesetzt werden. In diesem Fall ist durch eine geeignete Frequenzvergabe bei APs und Bridges dafür zu sorgen, dass auftretende Interferenzen minimiert werden.

Bei einer Nutzung von IEEE 802.11b beträgt die Backbone-Kapazität ca. 6 Mbps (ca. 1,5 Mbps pro Wagen), das bedeutet, dass von jedem Wagen aus
- bis zu 20 Passagiere mit ISDN-Geschwindigkeit auf das Internet bzw. lokalen Content im Zug zugreifen (mit ca. 70 kbps je Nutzer) oder
- bis zu 5 Passagiere Streaming-Media-Content nutzen (mit ca. 300 kbps je Nutzer) können.

Bei einer Nutzung von IEEE 802.11 g bzw. 802.11 a beträgt die Backbone-Kapazität ca. 24 Mbps (ca. 6 Mbps pro Wagen), das bedeutet, dass von jedem Wagen aus:
- bis zu 85 Passagiere mit ISDN (Integrated Services Digital Network)-Geschwindigkeit auf das Internet bzw. lokalen Content im Zug zugreifen (mit ca. 70 kbps je Nutzer) oder
- bis zu 20 Passagiere Streaming-Media-Content nutzen (mit ca. 300 kbps je Nutzer) können.

Eine mögliche Netzwerkverkehrssteuerung wird vom Access-Server 14, der als zentrale Routing-Instanz eingesetzt wird, wahrgenommen.

Eine Initialisierung des Datennetzwerks im Zug findet wie folgt statt: Nach dem Zusammenstellen des Zuges und der dann folgenden "Zugtaufe", nach einem Stromausfall oder nach der Rückkehr aus dem Ausland, wird die IP (Internet Protocol)-Kommunikationsinfrastruktur automatisch gebootet und konfiguriert eigenständig. Die Zuordnung der IP-Adressen erfolgt über einen DHCP (Dynamic Host Configuration Protocol)-Server im Access-Server 14. Im Rahmen dieses Vorgangs soll über das Managementsystem des Zuges die Konfiguration der einzelnen Komponenten automatisch stattfinden. Der Übergang vom LAN in das WAN (Wide Area Network), insbesondere dem Internet 24, wird durch den Access-Server 14 gebildet. Dieser dient als Routing-Instanz zwischen den VLANs und in Richtung WAN.

Je Zug wird ein ausreichender Adressvorrat von privaten IP-Adressen aus einem privaten IP-Adressraum zur Verfügung gestellt. Diese IP-Adressen werden bis zur CSA 28 eines Internet-Dienstanbieters übertragen. Die IP-Adressvergabe für die Fahrgastversorgung und für die einzelnen Netzkomponenten erfolgt über DHCP. Eine Vergabe von IP-Adressen für die einzelnen Netzkomponenten ist nur für Managementzwecke erforderlich. Hierbei muss jedoch sichergestellt werden, dass keine unberechtigten Benutzer bzw. Zugkomponenten auf dem Nachbargleis in die Infrastruktur eingebunden werden.

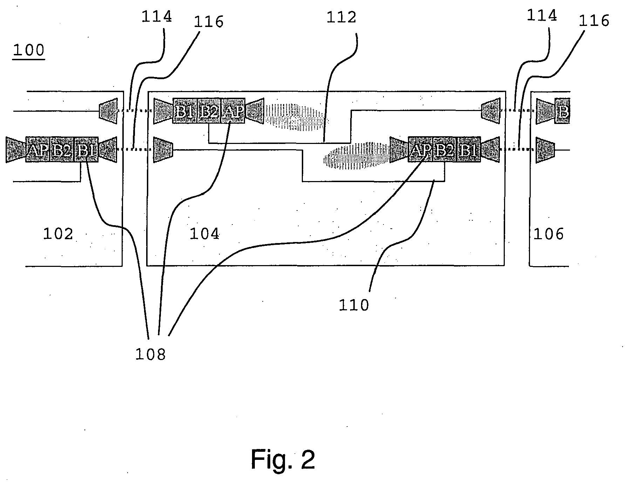

Zur lokalen Informationsversorgung kann ein lokales Netz im Zug gebildet werden. Hierzu dient innerhalb eines Zuges als zentrale Instanz des Zugnetzes die Servereinheit, die sich aus den Komponenten Access-Server 14, Gateway-Server 18 und Application-Server 16 zusammensetzt. Diese Servereinheit (Onboard Unit) ist komplett im Mittelwagen des Zugs untergebracht. Die Routing-Funktionalität (Layer 3) für das Zug-Datennetzwerk befindet sich im Access-Server 14. Das lokale Zug-Datennetzwerk außerhalb des Access-Servers 14 setzt sich zusammen aus:
- WLAN Access Points 20 bzw. Antennen,
- WLAN Bridges (siehe Fig. 2 Bezugszeichen 114 und 116) bzw. Antennen.

Eine Kommunikation zur Außenwelt außerhalb des Zugs erfolgt über den Access- und Gateway-Server 14 bzw. 18 (z.B. mittels Mobilfunk und/oder Wireless LAN/MAN-Technologien). Die Fahrgäste in den einzelnen Wagen greifen über die WLAN-Access Points 20 und über den Access- und Gateway-Server 14 bzw. 18 (extern) auf das Internet 24 zu (letzteres über die CSA 28).

Bei Übergang ins Ausland können alle aktiven Komponenten des Datennetzwerks im Zug abgeschaltet werden. Die WLAN-Access Points 20 bzw. WLAN-Bridges und der MAR 26 werden auf einem eigenen Stromkreis geführt, der beim Verlassen eines vorbestimmten Gebiets, beispielsweise beim Überschreiten der Landesgrenze GPS (Global Positioning System)-gesteuert ausgeschaltet wird. Nach der Rückkehr in das vorbestimmte Gebiet wird der Stromkreis automatisch wieder eingeschaltet und die Komponenten des WLAN-Netzwerks booten selbstständig und sind nach einer kurzen Zeit wieder funktionsfähig.

Grundlegende Voraussetzungen für den Aufbau des Datennetzwerks im Zug sind:
- die Möglichkeit der Installation von Hardware-Komponenten (Antennen, WLAN Access Points, WLAN Bridges, Switches, u.a.) an geeigneten Orten in den jeweiligen Zugwagen;
- eine Stromversorgung der Komponenten an den Installationsorten sowie entsprechende Verlegewege zur Verkabelung der Komponenten untereinander. Eine ausreichende Leistung der Stromversorgung muss gewährleistet sein.

Die Installationsorte der Antennen (in Verbindung mit den WLAN-Access Points) sollten so gelegen sein, dass eine ausreichende Funkversorgung des Wageninnern mittels WLAN erzielbar ist.

Im zuginternen Datennetzwerk sind wie bereits oben erwähnt mindestens 3 VLAN's realisiert, wovon eines für
- den Access von Fahrgästen (unverschlüsselt),
- eines für das Zugpersonal (verschlüsselt, Walled Garden) und
- eines für das Netzmanagement (verschlüsselt)
vorgesehen ist.

Das VLAN für das Netzmanagement sollte nicht über die WLAN-Schnittstelle geführt werden.

Im Datennetzwerk wird das IPv4 Protokoll verwendet. Für die Nutzung eines einheitlichen Netzwerk-Managements werden die SNMP-Standards (Simple Network Management Protocol) Version 1 unterstützt. Aus sicherheitstechnischer Sicht ist der Einsatz von SNMP Version 3 empfehlenswert. Das Netzequipment sollte in der Lage sein, SNMP-Traps zu realisieren und SNMP-Meldungen zu senden.

Um Übergriffe wie z.B. Datendiebstahl unter den Fahrgästen zu vermeiden, sollten die Hardwarekomponenten Funktionen zur Verfügung stellen, die einen untereinander stattfindenden Fahrgastverkehr untersagen (PSPF: Public Secure Packet Forwarding).

Um die Wartung zu vereinfachen, sollten Konfigurations- sowie Betriebssystems- und Applikations-Updates remote zu den Netzelementen verteilt und aktiviert werden können. Die einzelnen Netzelemente sollten nicht über die WLAN-AP's der Kundenschnittstelle ansprechbar sein.

Im Folgenden wird nun eine technische Lösungen zur Implementierung des erfindungsgemäßen Systems mit einem redundanten Datenetzwerk-Konzept in einem Zug 100 mit mehreren aneinander gekoppelten Wagen 102, 104 und 106 beschrieben. In Fig. 2 ist das vereinfachte Blockdiagramm der technischen Lösung am Beispiel der gekoppelten Wagen 102, 104 und 106 des Zugs 100 dargestellt. Diese Lösung spezifiziert sich über die Verwendung eines Geräts 108, das sowohl einen Access Point- als auch die WLAN-Bridge-Funktionalität beinhaltet und mit 3 Radiomodulen ausgestattet ist. Von diesen 3 Radiomodulen arbeiten zwei Module als WLAN-Bridges B1 und B2 und ein Modul als Access Point AP.

Das gebildete Datennetzwerk umfasst zwei Ethernetsegmente 110 und 112. Die beiden Segmente 110 und 112 werden parallel durch den gesamten Zug geführt. Das Netz im Zug wird damit in zwei Broadcast-Domänen aufgeteilt. Durch die Verwendung von zwei Geräten 108 im Wagen 104 kann sowohl der Fahrgastraum mit zwei Access Points AP (redundant) ausgeleuchtet werden, als auch die WLAN-Bridges B1 und B2 zwischen den Wagen 104 und 102 bzw. 106 redundant ausgelegt werden. Es werden zwei geswitchte Netze pro Zug aufgebaut. Die Versorgung der Fahrgasträume erfolgt im 2,4 GHz-Bereich, jeder Wagen ist mit zwei AP auszustatten. Hier stehen drei überscheidungsfreie Funkkanäle zur Verfügung, so dass eine quasi interferenzfreie Funkversorgung innerhalb der einzelnen Wagen sichergestellt werden kann. Für die WLAN-Bridge-Verbindungen 114 und 116 (WLAN-Backbone zwischen den Wagen 102, 104 und 106) wird der 5 GHz-Bereich verwendet, so dass eine komplette Entkopplung der WLAN-Zugangsnetze in den Fahrgasträumen und dem WLAN-Backbone zwischen den einzelnen Wagen erreicht wird.

Weitere Besonderheiten dieser Lösung bestehen darin, dass
- zwei IP-Subnetze gebildet werden, die parallel durch den Zug geführt werden,
- die lokale Routing-Instanz im Zug der Access Server 14 ist,
- bei Ausfall einer WLAN-Bridge-Antenne oder einer WLAN-Bridge das korrespondierende (funktonierende) System im Nachbarwagen in der Lage ist, sich auf die redundante, noch funktionierende WLAN-Bridge aufzuschalten, und
- die Geräte 108 in der Lage sind, Priorisierungsinformation aus dem TOS-Feld des IP-Paketes auszulesen und entsprechend den Regeln umzusetzen.

Um eine optimale Entkopplung zwischen dem Zugangsnetz und dem WLAN-Backbone zu erreichen, sollten die Bridges im Standard IEEE802.11a/h ausgeführt werden (Frequenz im 5 GHz Bereich). Die Antennen für den WLAN-Backbone werden vorzugsweise in der Nähe der jeweiligen Wagenübergänge platziert. Die Geräte 108 sind so ausgelegt, dass grundsätzlich zwei APs im Wagen vorgesehen sind. Je Wagenübergang werden zwei (redundante) WLAN-Bridge-Verbindungen 114 und 116 aufgebaut.

Das Management der Komponenten erfolgt über eine Netzwerkmanagement-Station (Patrol Agent) im Zug. Über diese Netzwerkmanagement-Station werden die Managementaufgaben im Zug realisiert.

Der Zugriff auf externe Verbindungen erfolgt über den Gateway-Server 18. Die Zug-Land-Schnittstelle ist in der Regel nur mittelbar, über den Access-Server 14, mit der lokalen IP/WLAN-Infrastruktur verbunden.

Die vorliegende Erfindung zeichnet sich dadurch aus, dass in einem Fahrzeug mit mehreren gekoppelten Einheiten wie einem Zug ein System für den Informationszugriff und die Kommunikation durch Fahrgäste geschaffen wird, das kostengünstig insbesondere mit Standard-Netzwerkkomponenten implementiert und redundant für eine hohe Ausfallsicherheit ausgelegt werden kann.

### BEZUGSZEICHENLISTE

- 10: Gruppe mit zentralen Systemkomponenten
- 12: Gruppe mit in Wagen eines Zugs angeordneten Komponenten
- 14: Access-Server
- 16: Application-Server
- 18: Gateway-Server
- 20: WLAN-Access Point
- 22: Endgerät (Laptop) mit WLAN-Funkmodul
- 24: Internet
- 26: MAR
- 28: CSA
- 30: Bahnhof
- 32: Funkverbindung zwischen WLAN AP 20 und Endgerät 22
- 100: Zug
- 102: Wagen des Zugs 100
- 104: Wagen des Zugs 100
- 106: Wagen des Zugs 100
- 108: Geräte mit WLAN-Access Point- und Bridge-Funktionalität
- 110: Ethernetsegment
- 112: Ethernetsegment
- 114: WLAN-Bridge Verbindung zwischen zwei benachbarten Wagen des Zugs
- 116: WLAN-Bridge Verbindung zwischen zwei benachbarten Wagen des Zugs

- AP: Access Point
- CSA: Central Service Area
- DSL: Digital Subscriber Line
- DHCP: Dynamic Host Configuration Protocol
- GPRS: General Packet Radio Service
- IEEE: Institute of Electrical and Electronics Engineers
- ICE: Intercity Express
- IP: Internet Protocol
- IPv4: Internet Protocol Version 4
- LAN: Local Area Network
- MAC: Media Access Control
- MAN: Metropolitan Area Network
- MAR: Mobile Access Router
- MDA: Mobile Digital Assistant
- PDA: Personal Digital Assistant
- PSPF: Public Secure Packet Forwarding
- SNMP: Simple Network Management Protocol
- SSID: Service Set Identifier
- UMTS: Universal Mobile Telecommunication System
- VLAN: Virtual LAN
- WAN: Wide Area Network
- WLAN: Wireless LAN

## Patentansprüche

1. System für den Informationszugriff und die Kommunikation in einem Hochgeschwindigkeitsfahrzeug (100) mit mehreren gekoppelten Einheiten (102, 104, 106), umfassend
- mindestens eine in einer Einheit des Fahrzeugs vorgesehene Servereinheit (14, 16, 18), die zur Informationsbereitstellung und Kommunikation eingerichtet ist,
- mehrere in verschiedenen Einheiten vorgesehene Funk-Zugriffspunkte (20), die zur Datenkommunikation mit Datenverarbeitungsgeräten (22) per Funk ausgebildet sind,
- ein Datennetzwerk (112, 114), das die Servereinheit (14, 16, 18) mit den Funk-Zugriffspunkten (20) kommunikationsmäßig verbindet und das drahtlose Kommunikationsverbindungen (114, 116) zwischen benachbarten gekoppelten Einheiten (102, 104, 106) aufweist,
**dadurch gekennzeichnet, dass**
es derart eingerichtet ist, dass die Funk-Zugriffspunkte (20) und die drahtlosen Kommunikationsverbindungen (114, 116) zwischen benachbarten gekoppelten Einheiten (102, 104, 106) abhängig von der geografischen Position des Fahrzeugs aktiviert oder deaktiviert werden.

2. System nach Anspruch 1,
**dadurch gekennzeichnet, dass**
eine drahtlose Kommunikationsverbindung (114, 116) zwischen zwei benachbarten gekoppelten Einheiten (102, 104, 106) des Fahrzeugs (100) durch eine Funkbrücke implementiert ist.

3. System nach Anspruch 2,
**dadurch gekennzeichnet, dass**
die Funkbrücke zur Funkkommunikation in einem Frequenzbereich ausgebildet ist, der sich vom für eine Funkkommunikation innerhalb von den Einheiten genutzten Frequenzbereich derart unterscheidet, dass auftretende Interferenzen minimiert werden.

4. System nach einem der Ansprüche 1 bis 3,
**dadurch gekennzeichnet, dass**
die Servereinheit einen Access- und Gateway-Server (14, 18) umfasst, der zur Steuerung der gesamten Kommunikation über das Datennetzwerk und zur Funkkommunikation mit dem Internet (24) eingerichtet ist.

5. System nach Anspruch 4,
**dadurch gekennzeichnet, dass**
der Access- und Gateway-Server (14, 18) derart eingerichtet ist, dass eine Funkkommunikation mit dem Internet mittels einer Mobilfunk- und/oder Wireless LAN/MAN-Technologie erfolgt.

6. System nach einem der vorhergehenden Ansprüche,
**dadurch gekennzeichnet, dass**
es derart eingerichtet ist, dass die Funk-Zugriffspunkte (20) und die drahtlosen Kommunikationsverbindungen (114, 116) zwischen benachbarten gekoppelten Einheiten (102, 104, 106) deaktiviert werden, wenn das Fahrzeug (100) ein vorbestimmtes Gebiet verlässt, und wieder aktiviert werden, wenn das Fahrzeug (100) wieder in das vorbestimmte Gebiet eintritt.

7. System nach einem der vorhergehenden Ansprüche,
**dadurch gekennzeichnet, dass**
die Servereinheit ferner einen Anwendungsserver (16) umfasst, der zur lokalen Informations- und Anwendungsbereitstellung im Fahrzeug (100) vorgesehen ist.

8. System nach einem der vorhergehenden Ansprüche,
**dadurch gekennzeichnet, dass**
das Datennetzwerk ein Local Area Network - LAN - ist, in dem mindestens drei virtuelle LANs - VLANs - implementiert sind, wovon ein erstes VLAN ein unverschlüsseltes LAN für den Zugriff von Fahrgästen im Fahrzeug, ein zweites VLAN ein verschlüsseltes LAN für Personal im Fahrzeug und ein drittes VLAN ein verschlüsseltes LAN für ein Netzmanagement ist.

9. System nach einem der vorhergehenden Ansprüche,
**dadurch gekennzeichnet, dass**
das Datennetzwerk und die drahtlosen Kommunikationsverbindungen zwischen benachbarten gekoppelten Einheiten redundant ausgelegt sind, wobei in einer Einheit mit Funk-Zugriffpunkten zwei, jeweils unterschiedlichen Segmenten (110, 112) des Datennetzwerks zugeordnete Funk-Zugriffspunkte vorgesehen sind und in einer Einheit jedes der beiden Segmente (110, 112) jeweils zwei drahtlose Kommunikationsverbindungen zwischen benachbarten gekoppelten Einheiten (102, 104, 106) aufweist.

10. System nach einem der vorhergehenden Ansprüche,
**dadurch gekennzeichnet, dass**
zwei Funk-Zugriffspunkte (20) in einigen Einheiten des Fahrzeugs derart angeordnet sind, dass von jedem Platz in diesen Einheiten eine für eine stabile Kommunikationsverbindung ausreichende Funkversorgung gewährleistet ist.

11. System nach Anspruch 10,
**dadurch gekennzeichnet, dass**
einer der zwei Funk-Zugriffspunkte (20) am Anfang und der andere am Ende einer Einheit des Fahrzeugs angeordnet ist.

12. System nach Anspruch 10 oder 11,
**dadurch gekennzeichnet, dass**
die zwei Funk-Zugriffspunkte (20) unterschiedliche Funkkanäle zur Kommunikation mit Datenverarbeitungsgeräten nutzen.

13. System nach einem der vorhergehenden Ansprüche,
**dadurch gekennzeichnet, dass**
Funk-Zugriffspunkte(20) jeweils in einem Frequenzbereich von etwa 2.4 GHz und drahtlose Kommunikationsverbindungen (114, 116) zwischen benachbarten gekoppelten Einheiten jeweils in einem Frequenzbereich von etwa 5 GHz betrieben werden.

14. System nach einem der vorhergehenden Ansprüche,
**dadurch gekennzeichnet, dass**
die drahtlosen Kommunikationsverbindungen (114, 116) zwischen benachbarten gekoppelten Einheiten (102, 104, 106) jeweils am Anfang und Ende jeder Einheit vorgesehen sind.

15. System nach Anspruch 14,
**dadurch gekennzeichnet, dass**
die drahtlosen Kommunikationsverbindungen (114, 116) im Bereich von Übergängen zwischen benachbarten gekoppelten Einheiten angeordnet sind.

16. System nach Anspruch 14,
**dadurch gekennzeichnet, dass**
die drahtlosen Kommunikationsverbindungen (114, 116) im Decken- oder Türenbereich bei bzw. von Übergängen zwischen benachbarten gekoppelten Einheiten angeordnet sind.

17. System nach einem der vorhergehenden Ansprüche,
**dadurch gekennzeichnet, dass**
die Funk-Zugriffspunkte (20) und die drahtlosen Kommunikationsverbindungen (114, 116) zwischen benachbarten gekoppelten Einheiten mit einem separaten Stromkreis versorgt werden.

## Claims

1. A system for accessing information and for communication in a high-speed vehicle (100) having a plurality of coupled units (102, 104, 106), comprising:
- at least one server unit (14, 16, 18) that is provided in one unit of the vehicle and is set up for making information available and for communication,
- a plurality of radio access points (20) which are provided in different units and are designed for data communication with data-processing devices (22) via radio,
- a data network (112, 114) which connects the server unit (14, 16, 18) to the radio access points (20) in terms of communication and which has wireless communications links (114, 116) between adjacent coupled units (102, 104, 106),
**characterized in that**
it is set up in such a way that the radio access points (20) and the wireless communications links (114, 116) between adjacent coupled units (102, 104, 106) are activated or deactivated depending on the geographical position of the vehicle.

2. The system of claim 1, **characterized in that** a wireless communication link (114, 116) between tweo adjacent coupled units (102, 104, 106) of the vehicle (100) are implemented by way of a radio bridge.

3. The system of claim 2, characerized in that the radio bridge is designed for radio communication in a frequency range that differs from the frequency range used for a radio communication within the units, such that occurring interferences are minimized.

4. The system of any of claims 1 to 3, **characterized in that** the server unit includes an access server and gateway server (14, 18) which are set up for controlling the entire communication via the data network and for radio communication with the Internet (24).

5. The system of claim 4, **characterized in that** the access server and gateway server (14, 18) are set up in such a way that a radio communication with the Internet is accomplished using a mobile-radio and/or wireless LAN/MAN technology.

6. The system of any of the preceding claims, characterzied in that it is set up in such a way that the radio access points (20) and the wireless communications links (114, 116) between adjacent coupled units (102, 104, 106) are deactivated if the vehicle (100) leaves a predetermined area and are again activated if the vehicle (100) again enters the predetermined area.

7. System of any of the preceding claims, **characterized in that** the server unit further comprises an application server (16), which is provided for local information and application provision.

8. The system of any of the preceding claims, **characterized in that** the data network is a Local Area Network-LAN-in which at least three virtual LANs-VLANs-are implemented, of which a first VLAN is an unencrypted LAN for access by passengers in the vehicle, a second VLAN is an encrypted LAN for personnel in the vehicle, and a third VLAN is an encrypted LAN for a network management.

9. The system of any of the preceding claims, **characterized in that** the data network and the wireless communications links between adjacent coupled units are laid out redundantly, wherein in a unit having radio access points, two radio access points are provided, each assigned to different segments (110, 112) of the data network, and each of the two segments (110, 112) in a unit has two wireless communications links between adjacent coupled units (102, 104, 106).

10. The system of any of the preceding claims, **characterized in that** two radio access points (20) are disposed in several units of the vehicle in such a way that radio coverage sufficient for a stable communications link is ensured from any place in these units.

11. The system of claim 10, **characterized in that** one of the two radio access points (20) is disposed at the beginning, and the other at the end of a unit of the vehicle.

12. The system of claim 10 or 11, **characterized in that** the two radio access points (20) use different radio channels for communication with data-processing devices.

13. The system of any of the preceding claims, **characterized in that** radio access points (20) are each operated in a frequency range of approximately 2.4 GHz, and wireless communications links (114, 116) between adjacent coupled units are each operated in a frequency range of approximately 5 GHz.

14. The system of any of the preceding claims, **characterized in that** the wireless communications links (114, 116) between adjacent coupled units (102, 104, 106) are provided at the beginning and end of each unit.

15. The system of claim 14, **characterized in that** the wireless communications links (114, 116) are disposed in the area of connecting corridors between adjacent coupled units.

16. The system of claim 14, wherein the wireless communications links (114, 116) are disposed in the ceiling or door area at or of connecting corridors between adjacent coupled units.

17. The system of any of the preceding claims, **characterized in that** the radio access points (20) and the wireless communications links (114, 116) between adjacent coupled units are powered by a separate electric circuit.

## Revendications

1. Système pour accéder aux informations et pour la communication dans un véhicule à grande vitesse (100) comportant une pluralité d'unités couplées (102, 104, 106), comprenant :
- au moins une unité de serveur (14, 16, 18) qui est prévue dans une unité du véhicule et est configurée pour rendre l'information disponible et pour la communication,
- une pluralité de points d'accès radio (20) qui sont prévus dans différentes unités et sont conçus pour la communication de données avec des dispositifs de traitement de données (22) par radio,
- un réseau de données (112, 114) qui relie l'unité serveur (14, 16, 18) aux points d'accès radio (20) en termes de communication et qui comporte des liaisons de communication sans fil (114, 116) entre des unités couplées adjacentes (102, 104, 106),
**caractérisé en ce que**
il est configuré de telle sorte que les points d'accès radio (20) et les liaisons de communication sans fil (114, 116) entre des unités couplées adjacentes (102, 104, 106) soient activés ou désactivés en fonction de la position géographique du véhicule.

2. Système selon la revendication 1, caractérisé en ce qui'une liaison de communication sans fil (114, 116) entre des unités couplées adjacentes (102, 104, 106) du véhicule (100) est mise en oeuvre par l'intermédiaire d'un pont radio.

3. Système selon la revendication 2, **caractérisé en ce que** le pont radio est conçu pour la communication radio dans une gamme de fréquences qui diffère de la plage de fréquence utilisée pour une communication radio dans les unités, de telle sorte que les interférences existantes sont minimisées.

4. Système selon l'une quelconque des revendications 1 à 3, **caractérisé en ce que** l'unité de serveur comprend un serveur d'accès et un serveur de passerelle (14, 18) qui sont configurés pour commander toute la communication via le réseau de données et pour la communication radio avec Internet (24).

5. Système selon la revendication 4, **caractérisé en ce que** le serveur d'accès et le serveur de passerelle (14, 18) sont configurés de telle manière qu'une communication par radio avec Internet soit réalisée à l'aide d'une radio mobile et / ou d'un sans fil LAN / MAN technologie.

6. Système selon l'une quelconque des revendications précédentes, caractérisé en ce qui'il est configuré de telle sorte que les points d'accès radio (20) et les liaisons de communication sans fil (114, 116) entre des unités couplées adjacentes (102, 104, 106) Sont désactivés si le véhicule (100) quitte une zone prédéterminée et est à nouveau activé si le véhicule (100) entre à nouveau dans la zone prédéterminée.

7. Système selon l'une quelconque des revendications précédentes, **caractérisé en ce que** l'unité de serveur comprend en outre un serveur d'application (16), qui est fourni pour l'information locale et la fourniture d'applications.

8. Système selon l'une quelconque des revendications précédentes, **caractérisé en ce que** le réseau de données est un réseau local LAN-dans lequel sont implémentés au moins trois LAN virtuels-VLAN, dont un premier VLAN est un LAN non chiffré pour l'accès par Passagers dans le véhicule, un deuxième VLAN est un LAN crypté pour le personnel du véhicule et un troisième VLAN est un réseau local crypté pour une gestion de réseau.

9. Système selon l'une quelconque des revendications précédentes, **caractérisé en ce que** le réseau de données et les liaisons de communication sans fil entre des unités couplées adjacentes sont disposés de façon redondante, dans lequel, dans une unité ayant des points d'accès radio, deux points d'accès radio sont prévus, chacun étant affecté à Différents segments (110, 112) du réseau de données, et chacun des deux segments (110, 112) dans une unité comporte deux liaisons de communication sans fil entre des unités couplées adjacentes (102, 104, 106).

10. Système selon l'une quelconque des revendications précédentes, **caractérisé en ce que** deux points d'accès radio (20) sont disposés dans plusieurs unités du véhicule de telle manière que la couverture radio suffisante pour une liaison de communication stable soit assurée à partir de n'importe quel endroit de ces unités.

11. Système selon la revendication 10, **caractérisé en ce que** l'un des deux points d'accès radio (20) est disposé au début et l'autre à la fin d'une unité du véhicule.

12. Système selon la revendication 10 ou 11, **caractérisé en ce que** les deux points d'accès radio (20) utilisent différents canaux radio pour la communication avec des dispositifs de traitement de données.

13. Système selon l'une quelconque des revendications précédentes, **caractérisé en ce que** les points d'accès radio (20) fonctionnent chacun dans une plage de fréquence d'environ 2,4 GHz, et des liaisons de communication sans fil (114, 116) entre des unités couplées adjacentes fonctionnent chacune dans un Gamme de fréquence d'environ 5 GHz.

14. Système selon l'une quelconque des revendications précédentes, **caractérisé en ce que** les liaisons de communication sans fil (114, 116) entre des unités couplées adjacentes (102, 104, 106) sont prévues au début et à la fin de chaque unité.

15. Système selon la revendication 14, **caractérisé en ce que** les liaisons de communication sans fil (114, 116) sont disposées dans la zone des corridors de connexion entre des unités couplées adjacentes.

16. Système selon la revendication 14, dans lequel les liaisons de communication sans fil (114, 116) sont disposées dans le plafond ou la zone de porte au niveau des corridors de connexion entre des unités couplées adjacentes.

17. Système selon l'une quelconque des revendications précédentes, **caractérisé en ce que** les points d'accès radio (20) et les liaisons de communication sans fil (114, 116) entre adjacents.
